# EUROPÄISCHE PATENTANMELDUNG

(11) **EP 0 942 207 A2**
(43) Veröffentlichungstag der Anmeldung: **15.09.1999**
(21) Anmeldenummer: 98123738.1
(22) Anmeldetag: 14.12.1998
(51) Int. Cl.: F16J 15/32

(54) **Dichtring**

(30) Priorität: 11.03.1998 US 38534
(71) Anmelder: Firma Carl Freudenberg, 69469 Weinheim (DE)
(72) Erfinder: Johnston, David Dr., East Hebron, New Hampshire 03232 (GB)

(57) **Zusammenfassung**

Ein Dichtungsring und Schmutzabweiser (10) für den Einsatz mit einer Dichtung. Der Dichtungsring und Schmutzabweiser (10) umfaßt dort einen biegsamen Ring (10), der mit einem Radialflansch eines Laufrings (20) in Kontakt steht. Der Dichtungsring und Schmutzabweiser (10) umfaßt des weiteren ein Anschlagelement (18), welches im wesentlichen radial mittig des biegsamen Rings (10) angeordnet ist. Der Dichtungsring und Schmutzabweiser (10) umfaßt auch einen Vorsprung (22), welcher sich von einer Seite des Dichtungsrings (10), die dem Anschlag (18) gegenüber liegt, aus erstreckt.

## Beschreibung

### Technisches Gebiet

Die vorliegende Erfindung betrifft einen Dichtring, insbesondere einen lasttragenden Dichtungsring und Schmutzabweiser zum Einsatz mit einer Wellendichtung.

### Stand der Technik

In dem Maß, in dem Automobile gewinnbringender geworden sind, haben Automobilhersteller nach gesteigerter Langlebigkeit und Qualität bei Wellendichtungen, wie sie überall in ihren Automobilen verwendet werden, verlangt. Die Automobilhersteller verlangen, daß die Dichtungen Schmiermittel zurückhalten und Schmutz, Korrosionspartikel und andere korrodierende Flüssigkeiten vom Eintritt in Schlüsselbetriebskomponenten der Automobile abweisen. Der Ausschluß von Fremdpartikeln durch die schmutzabweisenden Lippen in den meisten Dichtungen ist sehr wichtig, wenn kein Schmiermittel verwendet wird. Auch ist es wünschenswert, daß Verunreinigungen, die mit den schmutzausschließenden Lippen in Kontakt sind, nach außen entfernt und nicht zu den Dichtungsoberflächen geleitet werden.

Viele Dichtungen werden aus Elastomeren wie Acrylgummi, Butylgummi oder anderen Gummiarten hergestellt, um Langlebigkeit in der Schmutzausschlußdichtung und der Dichtungsgrenzfläche selbst sicherzustellen. Es hat viele Verfahren zum Verbinden schmutzausschließender Lippen von Dichtungsgrenzflächen gegeben, aber eine langlebige schmutzausschließende Lippe zum Einsatz mit einer Dichtlippe wird in dieser Technik noch immer gebraucht.

Des weiteren besteht in der Technik der Bedarf für eine Dichtungsanordnung, welcher verringerte Kräfte aufweist und Staub und Schlamm ausschließende Fähigkeiten bereitstellt, wobei eine staubausschließende Lippe verwendet wird, welche kostengünstiger und leichter herzustellen ist als andere nach derzeitiger herkömmlicher Technik.

### Darstellung der Erfindung

Eine Aufgabe der vorliegenden Erfindung ist es, einen neuen lasttragenden Dichtungsring und Schmutzabweiser zu schaffen.

Eine andere Aufgabe der vorliegenden Erfindung ist es, eine Dichtungsanordnung zu schaffen, welche einen lasttragenden Dichtungsring und Schmutzabweiser umfaßt, welcher die Reibung auf der Dichtung aufgrund der Zusammenbaukräfte verringert.

Eine weitere Aufgabe der vorliegenden Erfindung ist es, eine Staub und Schmutz ausschließende Fähigkeit für eine Dichtungsanordnung zu schaffen.

Noch eine weitere Aufgabe der vorliegenden Erfindung ist es, einen lasttragenden Dichtungsring und Schmutzabweiser zu schaffen, der keiner geringen Herstellungstoleranzen bedarf.

Um die vorgestellten Aufgaben zu erfüllen, umfaßt der Dichtungsring und Schmutzabweiser für den Einsatz mit einer Dichtung einen biegsamen Ring, wo jener Ring mit einem Radialflansch eines Laufrings in Kontakt ist. Der Dichtungsring und Schmutzabweiser umfaßt des weiteren ein Anschlagelement, welches im wesentlichen radial mittig des biegsamen Rings angeordnet ist. Der Dichtungsring und Schmutzabweiser umfaßt auch einen Vorsprung, welcher sich von einer dem Anschlag gegenüberliegenden Seite des Dichtungsrings aus erstreckt.

Ein Vorteil der vorliegenden Erfindung besteht darin, daß sie die Reibung auf eine Dichtungsanordnung aufgrund von Zusammenbaukräften verringert.

Ein anderer Vorteil der vorliegenden Erfindung besteht darin, daß sie eine Staub und Schmutz ausschließende Fähigkeit für eine Dichtungsanordnung schafft.

Noch ein weiterer Vorteil der vorliegenden Erfindung besteht darin, daß sie die Herstellungskosten durch größere Herstellungstoleranzen für den Dichtungsring und Schmutzabweiser senkt.

Andere Aufgaben, Eigenschaften und Vorteile der vorliegenden Erfindung werden aus der nachfolgenden Beschreibung und den angefügten Ansprüchen in Verbindung mit den begleitenden Zeichnungen klar hervorgehen.

### Kurzbeschreibung der Zeichnungen

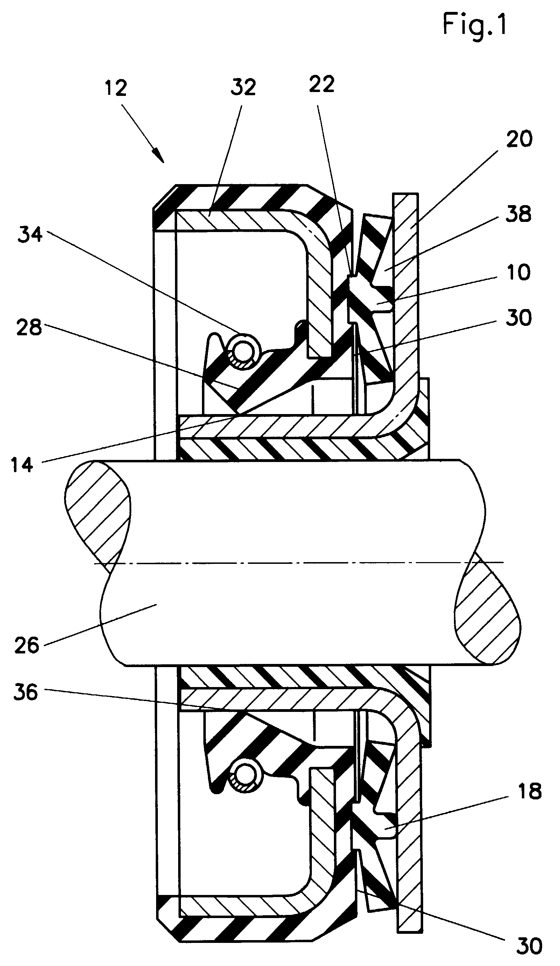

- Fig. 1: zeigt eine Schnittdarstellung der vorliegenden Erfindung.

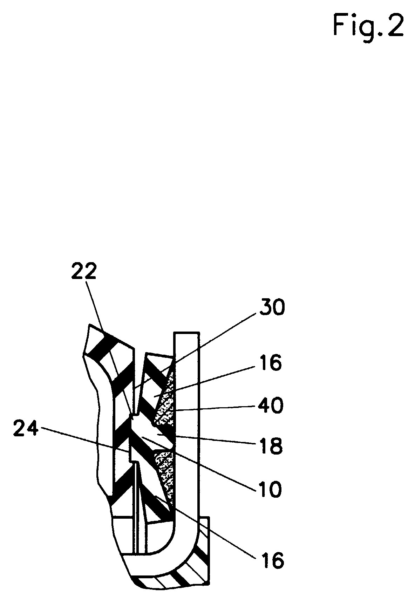

- Fig. 2: zeigt einen Teilschnitt der Dichtungsanordnung.

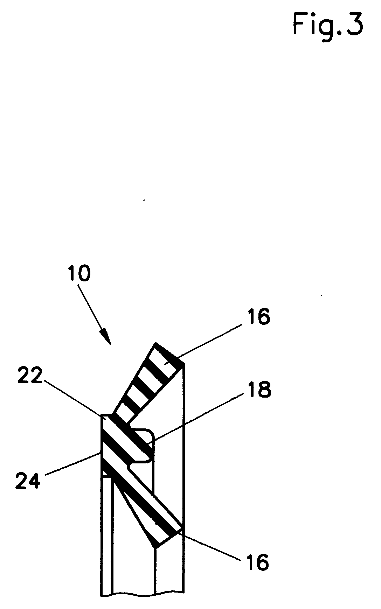

- Fig. 3: zeigt einen Schnitt des Dichtungsrings und Schmutzabweisers im nicht eingebauten Zustand.

### Ausführung der Erfindung

Mit Bezug auf die Zeichnungen wird ein neuartiger lasttragender Dichtungsring und Schmutzabweiser 10 nach der vorliegenden Erfindung gezeigt. Der Dichtungsring und Schmutzabweiser 10 wird im allgemeinen in einer Dichtungsanordnung 12 eingesetzt. Der Dichtungsring und Schmutzabweiser 10 wird verwendet, um fremde Verschmutzung wie Staub, Metallpartikel und andere Verschmutzungen von Annäherung und Verschmutzung der Dichtfläche 14 der Dichtungsanordnung 12 abzuhalten. Der Einsatz des neuartigen Dichtungsrings und Schmutzabweisers 10 verringert auch die Reibung auf die Kassette der Dichtungsanordnung 12 aufgrund von Zusammenbaukräften während des Herstellungsvorgangs. Des weiteren schafft der lasttragende Dichtungsring und Schmutzabweiser 10 eine Staub und Schlamm ausschließende Fähigkeit, welche nach herkömmlicher Technik nicht erreicht wird, wodurch eine längere Standzeit für die Dichtungsanordnung 12 an der Dichtungsoberfläche ermöglicht wird. Auch verringert der lasttragende Dichtungsring und Schmutzabweiser 10 die Kosten der Herstellung von Dichtungsanordnungen, da gröbere Toleranzen zulässig sind, wenn die Dichtlippen 16 des lasttragenden Dichtungsrings und Schmutzabweisers 10 gefertigt werden. Die Dichtlippen 16 des Dichtungsrings 10 müssen nicht genau die gleiche Länge aufweisen, um in einer angemessenen Weise zu arbeiten.

Der lasttragende Dichtungsring und Schmutzabweiser 10 umfaßt einen biegsamen Kunststoffring oder Dichtlippen 16 in seiner bevorzugten Ausführung. Insbesondere wird das Kunststoffmaterial VESPEL™ oder ein Polyamidmaterial verwendet, jedoch kann jede andere Art von biegsamem Kunststoff für den Ringbereich des lasttragenden Dichtungsrings und Schmutzabweisers 10 verwendet werden. Der Ring- oder Dichtlippenbereich 16 des lasttragenden Dichtungsrings 10 ist biegsam, so daß er einen lastfreien Zustand aufweist, welcher die natürliche Lage für den Kunststoffring darstellt, jedoch kann der Ring 16 in eine Vielzahl von verschiedenen Lagen innerhalb einer Dichtungsanordnung 12 gebogen werden. Die Fähigkeit, in verschiedene Lagen gebogen zu werden, erlaubt es dem lasttragenden Dichtungsring und Schmutzabweiser 10 in einer großen Vielfalt von unterschiedlich geformten und unterschiedlich großen Dichtungsanordnungen 12 eingesetzt zu werden.

Der lasttragende Dichtungsring 10 umfaßt auch ein Anschlagelement 18, welches im wesentlichen radial mittig des biegsamen Rings 16 angeordnet ist. Das Anschlagelement 18 ist ebenfalls aus demselben biegsamen Kunststoffmaterial wie der Dichtungsring 10 hergestellt. Das Anschlagelement 18 wird verwendet, um das Ausmaß der Biegsamkeit oder Biegung im Ring oder den Dichtlippen 16 des Dichtungsrings 10 zu steuern. Das Anschlagelement 18 kommt mit der Oberfläche des Radialflansches der Dichtungsanordnung 12 in Berührung, wodurch ein vorbestimmter Abstand für die Biegung des Rings oder der Dichtlippen 16 in einem betriebsbereit eingebauten Zustand geschaffen wird. Der Dichtungsring 10 umfaßt auch einen Vorsprung 22, welcher sich vom Dichtungsring 10 wegerstreckt, auf der dem Anschlagelement 18 gegenüberliegenden Seite. In der bevorzugten Ausführung ist der Vorsprung 22 zwei Millimeter breit, aber es sollte beachtet werden, daß jede beliebige Länge oder Breite abhängig von der Größe des eingesetzten Dichtungsaufbaus verwendet werden kann. In der bevorzugten Ausführung weist der Vorsprung 22 auch eine äußere Oberfläche 24 auf, die derart aufgerauht ist, daß sie in der Lage ist, sich in einen Elastomer- oder PTFE-Rücken der Dichtung 12 hineinzudrücken, wenn die Dichtungsanordnung montiert wird.

Die Dichtungsanordnung 12 umfaßt einen Laufring mit einem Radialflansch 20, Wobei der Laufring im allgemeinen eine L-Form aufweist. Der Laufring 20 steht in Kontakt mit einer Achse oder Welle 26. Die Dichtungsanordnung 12 umfaßt auch ein Elastomerdichtungselement 28. Das Dichtungselement 28 weist eine radial äußere Seite 30 auf. Die Dichtungsanordnung 12 umfaßt einen Stützring 32, um der Dichtungsanordnung 12 Festigkeit zu verleihen. Die Dichtungsanordnung 12 umfaßt auch ein Federelement 34, welches verwendet wird, um die Dichtlippe 36 in Kontakt mit der sich bewegenden Oberfläche auf dem Laufring 20 zu zwingen.

Der lasttragende Dichtungsring und Schmutzabweiser 10 wird zwischen der radial äußeren Seite 30 der Dichtungsanordnung und dem Laufring 20 der Dichtungsanordnung 12 angeordnet. Wenn der Dichtungsring 10 zwischen den zwei Oberflächen angeordnet wird, bewegen sich der Radialflansch des Laufrings 20 und die radial äußere Seite 30 der Wellendichtung aufeinander zu, wodurch der biegsame Kunststoffring 16 gebogen und zusammengedrückt wird, bis der Radialflansch des Laufrings 20 das Anschlagelement 18 berührt und das Elastomerdichtungselement 28 die aufgerauhte Oberfläche 24 des Dichtungsrings berührt. Die aufgerauhte Oberfläche 24 wird in den Elastomer 28 hineingedrückt, wodurch eine sichere Befestigung des Dichtungsrings 10 in der Dichtungsanordnung 12 gegeben ist. Wenn sie sich in ihrem Betriebszustand befindet, läßt die Dichtungsanordnung 12 die Dichtlippen oder den Ring 16 des Dichtungsrings 10 als die Dichtungskanten gegen den Radialflansch 20 wirken, während der Vorsprung als ein Dichtungselement auf die Elastomerdichtungsfläche 30 wirkt. Ein Spalt 38 wird zwischen dem Anschlagelement 18 und dem biegsamen Ring oder den Dichtlippen 16 gebildet. Dieser Spalt 38 kann mit Schmiermittel 40 gefüllt werden, wenn dies gewünscht wird, um die Sperre für Schmutz und Schlamm vor der Dichtungskantengrenzfläche noch weiter abzudichten. Der Kunststoffring 16 wird sich einen vorbestimmten Abstand weit, welcher von dem Anschlagelement 18 zu dem Vorsprung 22 gemessen wird, biegen, während er in den Elastomer hineingedrückt wird, indem er innerhalb der Dichtungsanordnung 12 zusammengeschoben wird.

Die vorliegende Erfindung ist in einer veranschaulichenden Art beschrieben worden, es versteht sich jedoch von selbst, daß die verwendeten Begriffe sich als für das Wesen der Beschreibung gebräuchlich verstehen und nicht als Einschränkung.

Viele Modifikationen und Abänderungen der vorliegenden Erfindung sind im Lichte der obigen Lehre möglich. Daher kann die vorliegende Erfindung innerhalb des Umfangs der angeschlossenen Ansprüche anders als wie insbesondere beschrieben, ausgeübt werden.

## Patentansprüche

1. Dichtring, umfassend einen Dichtungsring und Schmutzabweiser (10) zur Verwendung mit einer Dichtung, wobei der Dichtungsring und Schmutzabweiser (10) umfaßt: einen biegsamen Ring (10), welcher in Berührung mit einem Radialflansch eines Laufrings (20) steht; ein Anschlagelement (18), welches im wesentlichen radial mittig des biegsamen Rings (10) angeordnet ist; und einen Vorsprung (22), welcher sich von einer Seite des Dichtungsrings (10), die gegenüber dem Anschlagelement (18) liegt, aus erstreckt.

2. Dichtring nach Anspruch 1, wobei der Vorsprung (22) eine aufgerauhte Oberfläche (24) aufweist.

3. Dichtring und Schmutzabweiser nach Anspruch 1, wobei der Ring (10) aus Kunststoff hergestellt ist.

4. Dichtring und Schmutzabweiser nach Anspruch 1, wobei der Ring (10) eine lastfreie Erscheinungsform und eine Erscheinungsform unter Last aufweist.

5. Dichtring und Schmutzabweiser nach Anspruch 1, wobei sich die aufgerauhte Oberfläche (24) in eine Dichtfläche eindrückt und eine sichere Grenzfläche schafft.

6. Dichtring und Schmutzabweiser nach Anspruch 1, wobei zwischen dem Ring (10) und dem Anschlagelement (18) ein Spalt (38) ausgebildet ist.

7. Dichtring und Schmutzabweiser nach Anspruch 6, wobei der Spalt (38) mit einem Schmiermittel (40) gefüllt ist.

8. Dichtring und Schmutzabweiser zum Einsatz in eine Dichtungsanordnung (12), wobei der Dichtungsring und Schmutzabweiser umfaßt: einen biegsamen Kunststoffring (10), wobei ein Ende des Kunststoffrings (10) in ständiger Berührung mit einem Radialflansch eines Laufrings (20) der Dichtungsanordnung (12) steht; ein Anschlagelement (18), welches im wesentlichen radial mittig des Dichtungsrings und Schmutzabweisers (10) angeordnet ist, wobei das Anschlagelement (18) den Radialflansch berührt; und einen Vorsprung (22), welcher sich vom Dichtungsring und Schmutzabweiser (10) aus erstreckt, wobei der Vorsprung (22) eine Dichtfläche der Dichtungsanordnung (12) berührt.

9. Dichtring und Schmutzabweiser nach Anspruch 8, wobei der Vorsprung (22) eine aufgerauhte äußere Oberfläche (24) aufweist.

10. Dichtring und Schmutzabweiser nach Anspruch 9, wobei sich der Vorsprung (22) in die Dichtfläche hineindrückt und den Dichtungsring (10) sicher in seiner Lage hält.

11. Dichtring und Schmutzabweiser nach Anspruch 8, wobei ein Spalt (38) zwischen dem Ring (10) und dem Anschlagelement (18) ausgebildet ist.

12. Dichtring und Schmutzabweiser nach Anspruch 11, wobei der Spalt (38) mit einem Schmiermittel (40) gefüllt ist.

13. Dichtring und Schmutzabweiser nach Anspruch 8, wobei sich der Ring (10) einen vorbestimmten Weg biegt.

14. Dichtungsanordnung zum Einsatz auf einer Welle (26), wobei der Aufbau umfaßt: eine Elastomerdichtung (10), wobei die Dichtung (10) eine Dichtfläche aufweist, die sich radial erstreckt; einen Radialflansch in Kontakt mit der Elastomerdichtung (10); und einen Dichtungsring, welcher zwischen der Dichtfläche und dem Radialflansch angeordnet ist.

15. Dichtungsanordnung nach Anspruch 14, wobei der Dichtungsring (10) einen biegsamen Kunststoffring aufweist.

16. Dichtungsanordnung nach Anspruch 15, wobei der Dichtungsring (10) ein Anschlagelement (18) aufweist.

17. Dichtungsanordnung nach Anspruch 16, wobei sich das Anschlagelement (18) über einen vorbestimmten Abstand erstreckt.

18. Dichtungsanordnung nach Anspruch 15, wobei der Dichtungsring (10) einen Vorsprung (22) aufweist, welcher sich in die Dichtfläche hineindrückt.

19. Dichtungsanordnung nach Anspruch 16, wobei ein Spalt (38) zwischen dem Ring (10) und dem Anschlagelement (18) ausgebildet ist.

20. Dichtungsanordnung nach Anspruch 19, wobei der Spalt (38) mit einem Schmiermittel (40) gefüllt ist.
